# EUROPEAN PATENT APPLICATION

(11) **EP 4 693 078 A1**
(43) Date of publication of application: **11.02.2026**
(21) Application number: 24193660.8
(22) Date of filing: 08.08.2024
(51) Int. Cl.: G06F 21/10, G06F 21/31

(54) **METHOD FOR SECURING ACCESS TO A USER ACCOUNT AT A CONTENT PROVIDER SYSTEM, CORRESPONDING COMPUTER PROGRAM PRODUCT AND DEVICES**

(71) Applicant: Nagravision Sarl, 1033 Cheseaux-sur-Lausanne (CH)
(72) Inventor: BONNETE, Frédéric, 1033 CHESEAUX-SUR-LAUSANNE (CH)
(74) Representative: Santarelli

(57) **Abstract**

A method is proposed for securing access to a user account at a content provider system by a receiving device communicatively connected to a LAN. Such method comprises:
- receiving a piece of information representative of electronic devices connected to the LAN, the piece of information being associated to the user account.

For at least one digital fingerprint associated to the user account, the digital fingerprint being representative of electronic devices connected to a respective LAN according to a previously received piece of information associated to the user account, the first electronic device executes:
- comparing a number of stationary electronic devices connected to the LAN according to the piece of information and a number of stationary electronic devices connected to the respective LAN according to the digital fingerprint, delivering an evaluation of a difference in a number of stationary electronic devices expected to be connected to the respective LAN.

## Description

### 1. FIELD OF THE DISCLOSURE

The field of the disclosure is that of the delivery of content, e.g. a video content, an audio content, a multimedia content, etc.

More specifically, the disclosure relates to a method for securing access to a user account at a content provider system, e.g. for accessing a content delivered by the content provider system.

The disclosure can be of interest in any field wherein such securing of access to a user account at a content provider system occurs. This is the case e.g. in the field of the delivery of content to applications running in an environment in communication with the internet.

### 2. TECHNOLOGICAL BACKGROUND

Content providers are currently in charge of distributing content (e.g. multimedia content) to users by means of receiving devices (e.g. smartphones, tablets, TVs, ...) able to handle multimedia contents. Each user can have several of such receiving devices.

According to their business rules, content providers can require to have their services to be limited per household corresponding to a paying account (Pay-Tv service, software licence...). The difficulties start when the owner of such paying account is sharing his credentials with others, located in other households, which constitute an illegal usage. In some situations, the illegal usage can be from another country and to not be detected. For instance, the illegal users manage to put in place a virtual private network (VPN) to appear to be in the same country as expected for the service.

Some content providers, depending on their business rules (e.g. on the pricing paid), can also allow to use or not their services in multiple households. Those type of authorizations can be based on a declaration, rarely, or based on an accepted usage, or can be limited in time.

This is therefore a common industry issue to identify a household and localize it, and/or also identify the devices in the household which are accessing the service through a given user account.

Some content providers are enabling their software to run on multiple devices of a given user, and for this they request that the known user login/password shall be used every time the device is used. By doing so a provider can detect simultaneous usages and can then decide of the limit. Furthermore, when a device is changing some of its elements (such a hard drive replacement in a laptop, or a CPU replacement in a desktop), the software is able to detect it is an already approved device, but for which some hardware elements have been changed. The user of the corresponding account has also the capability to remove by himself and old authorized device so that he can enable a new one.

Some companies are providing a paying service localizing the Internet Protocol (IP) addresses and the potential use of VPNs. To achieve the localization of the IP addresses they use databases which have been built on all the IP addresses and where, the seen WIFI services or tower cells, have enabled by triangulation to define the corresponding position (latitude, longitude and precision radius). Most probably the explicit consent of the users to have their IP addresses part of a database localizing them (the one of their households, usually the one of the gateways) has not been given for this.

There is thus a need for a solution for securing access to a user account by identifying the household from which a receiving device accesses the user account. Preferably, such method should not rely on the geolocation of the household.

### 3. SUMMARY

A particular aspect of the present disclosure relates to a method for securing access to a user account at a content provider system by at least one receiving device communicatively connected to a local network. According to such method, a first electronic device communicatively connected to at least one local network a receiving device is communicatively connected to, the first electronic device being communicatively connected to the local network through a gateway of the local network, executes: receiving, from a second electronic device communicatively connected to a local network among said at least one local network, a piece of information representative of at least one electronic device connected to the local network, the piece of information being associated to the user account.

For at least one digital fingerprint associated to the user account, the digital fingerprint being representative of at least one electronic device connected to a respective local network according to a previously received piece of information associated to the user account, the first electronic device executes: comparing a number of stationary electronic device(s) connected to the local network according to the piece of information and a number of stationary electronic device(s) connected to the respective local network according to the digital fingerprint, the comparing delivering an evaluation of a difference in a number of stationary electronic device(s) expected to be connected to the respective local network.

Thus, the present disclosure proposes a new and inventive solution for securing access to a user account at a content provider system (e.g. belonging to an operator such as a pay-tv operator) by a receiving device (e.g. a smartphone, a set top box (STB), a computer, a TV receiving device (e.g. an HbbTV), ...).

More particularly, the obtention of a list of the electronic devices (e.g. a receiving device as detailed above, but also connected cameras, connected captors, connected lights, connected plugs, etc.) connected to the local network the receiving device is connected to allows building a digital fingerprint of the household wherein the local network is implemented. A further comparison of the fingerprint with the list of the stationary electronic devices effectively connected to the local network, e.g. when the receiving device accesses the user account, allows verifying that the receiving device accesses the user account from an allowed household. This secures access to the user account. Furthermore, such securing is performed without requiring the geolocation of the household.

In some embodiments, the second electronic device is implemented in a receiving device communicatively connected to the considered local network.

In some embodiments, when the difference in the number of stationary electronic device(s) is above a first predetermined threshold, the first electronic device executes: sending, to the content provider system, a first information representative of the difference in the number of stationary electronic device(s) expected to be connected to the respective local network.

The first predetermined threshold is e.g. 80% or 90% of the number of stationary electronic device(s) expected to be connected to the respective local network associated to the digital fingerprint. Such electronic device considered as stationary is e.g. Smart TVs, STBs, Desktop PCs, but also connected cameras, connected captors, connected lights, connected plugs...

Thus, when the change in the number of stationary electronic device(s) expected to be connected to the respective local network is above the first predetermined threshold, the content provider is informed of the change. The content provider can thus investigate if their business rules are respected or not for accessing the user account. For instance, it can be controlled from how many households the service is accessed.

In some embodiments, when the difference in the number of stationary electronic device(s) is above the first predetermined threshold, the first electronic device further executes: generating a new digital fingerprint representative of the at least one electronic device connected to the local network according to the piece of information, the new digital fingerprint being added to the at least one digital fingerprint associated to the user account for a next execution of said comparing.

Indeed, when the change in the number of stationary electronic device(s) is above e.g. 80% or 90% of the number of stationary electronic device(s) expected to be connected to the respective local network according to the digital fingerprint, it is most likely that the receiving device is in another household than the one identified by the considered digital fingerprint. A new digital fingerprint is thus generated for identifying the new household.

In some embodiments, when said generating is performed more than a predetermined number of times over a time period, the first electronic device further executes: sending, to the content provider system, a second information representative of the number of executions of the generation, over the time period, of a new digital fingerprint associated to the user account.

Thus, the content provider is informed of the number of new households detected over the predetermined time period. The content provider can thus investigate if their business rules are respected or not, e.g. in term of credential sharing between households.

In some embodiments, when the difference in the number of stationary electronic device(s) is below a second predetermined threshold lower than the first predetermined threshold, the first electronic device executes: updating the digital fingerprint for being representative of the at least one electronic device connected to the local network according to the piece of information.

The second predetermined threshold is e.g. 10% or 20% of the number of stationary electronic device(s) expected to be connected to the respective local network according to the digital fingerprint.

Thus, when the difference in the number of stationary electronic device(s) is below the second predetermined threshold, the considered digital fingerprint is updated. It can indeed be expected that with such a low difference, the receiving device is still in the same household, only the configuration of the household has slightly changed.

In some embodiments, said comparing further delivers a third information representative of at least one first stationary electronic device connected both to the local network according to the piece of information and to the respective local network according to the digital fingerprint. Said updating the digital fingerprint is not executed when the at least one first stationary electronic device comprises at least one receiving device configured for accessing the user account at the content provider system.

Thus, when the one or more receiving device configured for accessing the user account is still connected to the local network according to the piece of information, then one can consider that the other devices associated to the digital fingerprint that are no more connected according to the piece of information are not accessible (e.g. some home automation devices may be offline). But it is not necessarily a risk of fraud. There is thus no need for updating the fingerprint of the household.

In some embodiments, said comparing further delivers a fourth information representative of at least one second stationary electronic device that is not connected to the local network according to the piece of information and that is connected to the respective local network according to the digital fingerprint. Said updating the digital fingerprint is executed only when the at least one second stationary electronic device remains not connected according to the successive received pieces of information after a predetermined number of executions of said receiving and of said comparing.

Thus, the digital fingerprint of the household is updated when it is confirmed that the number of stationary electronic devices connected to a local network is changed.

According to another aspect of the present disclosure, the second electronic device executes:
- obtaining a piece of information, the piece of information being representative of at least one electronic device connected to the local network, the piece of information being associated to the user account; and
- sending, to the first electronic device communicatively connected to the local network through a gateway of the local network, the piece of information.

Thus, the obtention of a list of the electronic devices connected to the local network the receiving device is connected to allows building, on the remote server side, the digital fingerprint of the household wherein the local network is implemented.

For instance, the second electronic device is implemented in the receiving device and runs a user agent associated to an application allowing access to the contents available from the content provider system. Alternatively, the second electronic device is implemented e.g. in the gateway.

In some embodiments, said obtaining a piece of information is executed responsive to a request sent by the receiving device for connecting to the user account on the content provider system.

Thus, the list of the electronic devices connected to the local network is updated each time the receiving device requests to connect to the user account. This secures the access to the user account each time the receiving device requests such access.

In some embodiments, said obtaining a piece of information is executed according to a predetermined time schedule.

Thus, the list of the electronic devices connected to the local network is updated according to the predetermined time schedule. This secures the access to the user account e.g. periodically.

In some embodiments, said obtaining a piece of information comprises: receiving, from a router of the local network, a list of one or more electronic device(s) connected to the local network.

Thus, the first electronic device directly accesses to the list of the electronic device(s) connected to the local network. In some embodiments, the router is part of the gateway.

In some embodiments, the one or more electronic device(s) is connected to the local network using a Matter protocol.

In some embodiments, said obtaining a piece of information comprises: executing a network discovery for discovering at least one electronic device connected to the local network.

Another aspect of the present disclosure relates to a computer program product comprising program code instructions for implementing the above-mentioned method for securing access to a user account at a content provider system (in any of the different embodiments discussed above), when the program is executed on a computer or a processor.

Another aspect of the present disclosure relates to a device comprising means configured for executing all or part of the corresponding steps of the above-mentioned method for securing access to a content as executed by the first electronic device (in any of the different embodiments discussed above). Thus, the features and advantages of this device are the same as those of the corresponding steps of said method. Therefore, they are not detailed any further.

Another aspect of the present disclosure relates to a device comprising means configured for executing all or part of the corresponding steps of the above-mentioned method for securing access to a content as executed by the second electronic device (in any of the different embodiments discussed above). Thus, the features and advantages of this device are the same as those of the corresponding steps of said method. Therefore, they are not detailed any further.

According to another aspect of the present disclosure, there is provided a method for securing access to a user account at a content provider system for at least one receiving device communicatively connected to a local network,
wherein a first electronic device communicatively connected to at least one remote network where the at least one receiving device is communicatively connected, the first electronic device being communicatively connected to the local network through a gateway of the local network, and wherein the method comprises the steps of:
- receiving, from a second electronic device located in the local network and communicatively connected to said remote network, a piece of information representative of at least one stationary electronic device connected to the local network, the piece of information being associated to the user account, wherein, for at least one digital fingerprint associated to the user account, the digital fingerprint being representative of the at least one stationary electronic device connected to a respective local network according to a previously received piece of information associated to the user account, the first electronic device executes:
- comparing at least one stationary electronic device connected to the local network according to the piece of information to at least one stationary electronic device connected to the respective local network according to the digital fingerprint, and
- determining the correspondence between the at least one stationary electronic device present in the local network to at least one stationary electronic device connected to the respective local network according to the digital fingerprint.

### 4. LIST OF FIGURES

Other features and advantages of embodiments shall appear from the following description, given by way of indicative and non-exhaustive examples and from the appended drawings, of which:
- Figure 1 illustrates a receiving device communicatively connected to a local area network (LAN), a content provider system and a back-end server being remotely communicatively connected to the LAN through a gateway of the LAN, according to one embodiment of the present disclosure;
- Figure 2 illustrates a flowchart of a method for securing access to a user account at the content provider system of Figure 1 according to one embodiment of the present disclosure;
- Figure 3 illustrates an example of the structural blocks of a first electronic device allowing steps of the method of Figure 2 to be executed by the back-end server of Figure 1 according to one embodiment of the present disclosure;
- Figure 4 illustrates an example of the structural blocks of a second electronic device allowing steps of the method of Figure 2 to be executed by the receiving device of Figure 1 according to one embodiment of the present disclosure.

### 5. DETAILED DESCRIPTION

In all of the figures of the present document, the same numerical reference signs designate similar elements and steps.

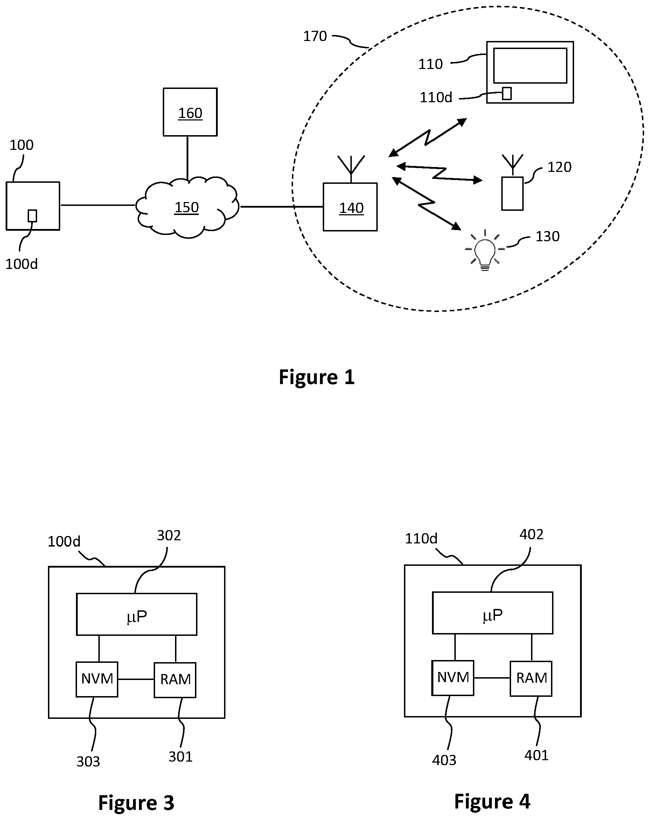

Referring now to **figure 1**, we illustrate a receiving device 110 communicatively connected to a LAN 170, a content provider system 160 and a back-end server 100 being remotely communicatively connected to the LAN 170 through a gateway 140 of the LAN, according to one embodiment of the present disclosure.

The receiving device 110 is a connected TV (e.g. a Hybrid Broadcast Broadband TV (HbbTV)). However, in other embodiments, the receiving device 110 is e.g. a smartphone, a set top box, a computer, a tablet, ...

Back to figure 1, the LAN 170 is of a wireless type, e.g. implementing a WIFI protocol. However, in other embodiments, the LAN 170 is of a wired type, e.g. implementing an ethernet protocol.

Back to figure 1, different devices are also communicatively connected to the LAN 170. In the present embodiment, a connected light bulb 130 and a smartphone 120 are also communicatively connected to the LAN 170. However, any kind of electronic devices may be connected to the LAN 170. In any case, the devices communicatively connected to the LAN 170 can be sorted as stationary devices 110, 130 or as portable devices 120. More particularly:
- Stationary devices 110, 130 are e.g. TVs, set-top boxes, Desktop PCs, connected home automation devices like e.g. connected cameras, connected captors, connected lights, connected plugs ... In this later case, the connected home automation devices are connected to the LAN using e.g. a Matter protocol. The stationary devices are typically designed to be used in a fixed location. Hence, the stationary devices 110, 130 may be household electronic appliances. The household appliances comprise devices which assist in household functions such as cooking, cleaning, food preservation and home automation. Some of these appliances may be referred to as "white goods". Other types of these appliances may be home automation appliances configured to control home attributes such as lighting, climate, entertainment systems, and appliances. Other types of home automation appliances include security systems and components thereof. The household appliances may also include devices in the form of consumer electronics for entertainment, communications and recreation. These types of devices may be referred to as "brown goods" or "black goods". Examples of consumer electronics for entertainment include devices like TVs and computers.
- Portable devices 120 are e.g. smartphones, tablets, ... In other words, such portable devices 120 are usually carried (or worn) by a user. The portable devices 120 may be powered by battery.

Depending on the embodiment, any number of electronic device(s) 110, 120, 130 is connected to the LAN 170, e.g. only one electronic device or a plurality of electronic devices.

Back to figure 1, the content provider system 160 is communicatively connected to the LAN 170 through the gateway 140 of the LAN 170. More particularly, the content provider system 160 is a remote system communicatively connected to the gateway 140 through a communications network 150. For instance, the communications network 150 is of a xDSL type, implementing an internet protocol. Such network is thus of a wired type in the present embodiment. However, in other embodiments, the communications network 150 implements a wireless communications technology, e.g. based on a cellular protocol (e.g. a 3GPP 2G, 3G, 4G or 5G protocol), on a WiMAX protocol, .... In such configurations, the content provider system 160 provides content(s) to the receiving device 110 e.g. through an over-the-top (OTT) service. For instance, the receiving device 110 runs a streaming application for rendering the content(s) received from the content provider system 160.

Generally speaking, the electronic devices 110, 120, 130 are communicatively connected to the LAN 170 through a router of the LAN 170. In the present embodiment, the router is part of the gateway 140. However, in other embodiments, such router is a device distinct from the gateway 140 and in communications with said gateway 140.

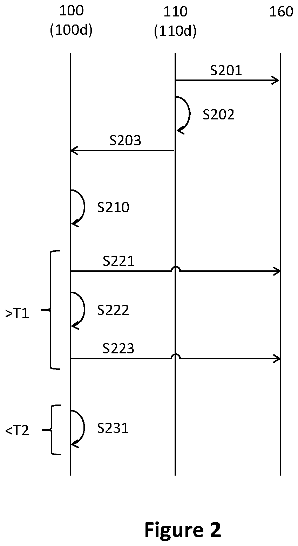

In order to secure the access to a user account at the content provider system 160 by the receiving device 110, the back-end server 100 collects and analyses the data provided by the second electronic device 110d implemented in the receiving device 110. More particularly, the back-end server 100 collects and analyses the data provided by the second electronic device 110d according to the method for securing access to a user account detailed below in relation with figure 2. The back-end server 100 is a remote system communicatively connected to the gateway 140 through the communications network 150.

In the present embodiment, the second electronic device 110d is implemented in the receiving device 110. However, in other embodiments, the second electronic device 110d is implemented in the router of the LAN 170. In yet other embodiments the second electronic device 110d is implemented in another device connected to the LAN 170 and distinct from the receiving device 110.

Back to figure 1, in order to be able to implement the corresponding steps of the method for securing access to a user account detailed below in relation with figure 2, the back-end server 100 comprises a first electronic device 100d comprising means configured for executing said steps.

However, in some embodiments, the first electronic device 100d is implemented directly in the content provider system 160. For instance, the back-end server 100 is part of the content provider system 160.

Referring now to **Figure 2**, we describe the steps of a method for securing access to a user account at the content provider system 160 by the receiving device 110 according to one embodiment of the present disclosure.

More particularly, in a **step S201**, the receiving device 110 sends, to the content provider system 160, a request for connecting to a user account on the content provider system 160.

In a **step S202**, responsive to the request sent by the receiving device 110, the second electronic device 110d obtains a piece of information representative of all or part of the electronic devices 110, 120, 130 connected to the LAN 170. The second electronic device 110d associates the piece of information to the user account. Such piece of information comprises e.g. the Media Access Control (MAC) address or the Internet Protocol (IP) address of the electronic devices 110, 120, 130.

For instance, in the embodiment of figure 1 wherein the second electronic device 110d is implemented in the receiving device 110, the second electronic device 110d may run a user agent associated to an application allowing access to the contents available from the content provider system 160. As such, the second electronic device 110d can have access to the request sent in step S201 and to the data about the user account. Conversely, the second electronic device 110d can have access to a list of all or part of the electronic devices 110, 120, 130 connected to the LAN 170 by requesting such data from a router of the LAN 170, e.g. a router incorporated in the gateway 140. In such cases the second electronic device 110d receives the list of all or part of the electronic devices 110, 120, 130 connected to the LAN 170 from such router of the LAN 170.

Alternatively, in some embodiments, the second electronic device 110d is implemented in said router of the LAN 170. In this case, the second electronic device 110d directly collects the necessary data from the router. Alternatively, the data about the user account may be stored in the second electronic device 110d e.g. during a set-up phase.

In yet other embodiments, the second electronic device 110d is implemented in another device connected to the LAN 170. In this case, the second electronic device 110d requests the necessary data from the router. For instance, the second electronic device 110d receives the list of all or part of the electronic devices 110, 120, 130 connected to the LAN 170 from the router of the LAN 170. The data about the user account may be stored in the second electronic device 110d e.g. during a set-up phase. Alternatively, the data about the user account may be sent to the second electronic device 110d by the router when the router receives the request sent by the receiving device 110 in step S201.

In the embodiment of figure 2, the list of all or part of the electronic devices 110, 120, 130 connected to the LAN 170 is updated each time the receiving device 110 requests to connect to the user account. This secures the access to the user account each time the receiving device 110 requests such access. However, in some embodiments, the step S201 is not executed and the step S202 is executed based e.g. on a periodic basis or on a predetermined time schedule. In this later case, the list of all or part of the electronic devices 110, 120, 130 connected to the LAN 170 is updated according to the predetermined time schedule. This secures the access to the user account e.g. periodically. In some embodiments, the step S202 is executed both responsive to the execution of the step S201 and based e.g. on a periodic basis or on a predetermined time schedule.

In some embodiments, the piece of information is obtained by the second electronic device 110d by executing a network discovery for discovering all or part of the electronic devices 110, 120, 130 connected to the local network.

Back to figure 2, in a **step S203**, the second electronic device 110d sends the piece of information associated to the user account to the first electronic device 100d.

Thus, the first electronic device 100d accesses to all or part of the electronic devices 110, 120, 130 connected to the LAN 170 through the piece of information e.g., in a form of a list of devices. This allows building a digital fingerprint of the household wherein the LAN 170 is implemented. Such digital fingerprint is representative of the electronic device(s) 110, 120, 130 connected to the LAN 170 according to the received piece of information. The digital fingerprint is also associated to the user account as is the received piece of information.

However, depending e.g. if a same user account is used in different households or if the configuration of a given household changes in term of devices connected to the LAN, we may have different digital fingerprints associated to a same user account as further discussed below e.g. in relation with step S222.

Thus, after receiving the piece of information in step S203, for at least one existing digital fingerprint associated to the user account, the digital fingerprint being representative of at least one electronic device connected to a respective LAN according to a previously received piece of information associated to the user account, the first electronic device 100d executes a **step S210** wherein a number of stationary electronic device(s) 110, 130 connected to the LAN 170 according to the piece of information received in step S203 is compared to a number of stationary electronic device(s) connected to the respective LAN according to the considered digital fingerprint. Such comparison delivers an evaluation of a difference in a number of stationary electronic device(s) expected to be connected to the respective LAN.

The comparison of the digital fingerprint with the list of the stationary electronic device(s) 110, 130 effectively connected to the LAN 170 according to the piece of information received in step S203 allows verifying that the receiving device 110 accesses the user account from an allowed household. This secures access to the user account. Furthermore, such securing is performed without requiring geolocation of the household.

Back to figure 2, when the difference in the number of stationary electronic device(s) is above a first predetermined threshold T1, the first electronic device 100d executes a **step S221** wherein a first information representative of the difference in the number of stationary electronic device(s) 110, 130 expected to be connected to the respective LAN is sent to the content provider system 160.

Thus, the content provider is informed of the change in a number of stationary electronic device(s) expected to be connected to the respective LAN. The content provider can thus investigate if their business rules are respected or not for accessing the user account (e.g. is the user account accessed from an unauthorized household?).

The first predetermined threshold T1 is e.g. 80% or 90% of the number of stationary electronic device(s) expected to be connected to the respective LAN associated to the considered digital fingerprint.

When the difference in the number of stationary electronic device(s) is above the first predetermined threshold T1, the first electronic device 100d further executes a **step S222** wherein a new digital fingerprint representative of the electronic device(s) 110, 120, 130 connected to the LAN 170 according to the piece of information received in step S203 is generated. The new digital fingerprint is added to the one (or more) digital fingerprint(s) already associated to the user account. This provides an updated set of digital fingerprints associated to the user account for a next execution of the step S210.

Indeed, when the difference in the number of stationary electronic device(s) is above first predetermined threshold T1 (e.g. 80% or 90% of the number of stationary electronic device(s) expected to be connected to the respective LAN according to the digital fingerprint), it is most likely that the receiving device 110 is in another household than the one identified by the considered digital fingerprint. A new digital fingerprint is thus generated for identifying the new household.

However, in some embodiments, the step S222 is not executed and the number of digital fingerprints is not updated according to the mechanism of step S222.

Back to Figure 2, when the step S222 is performed more than a predetermined number of times over a predetermined time period, the first electronic device 100d further executes a **step S223** wherein a second information is sent to the content provider system 160. More particularly, the second information is representative of the number of executions, over the time period, of the step S222 of generation of a new digital fingerprint associated to the user account.

Thus, the content provider is informed of the number of new households detected over the predetermined time period. The content provider can thus investigate if their business rules are respected or not, e.g. in term of credential sharing between households.

However, in some embodiments, the step S223 is not executed.

Back to Figure 2, when the difference in the number of stationary electronic device(s) is below a second predetermined threshold T2 lower than the first predetermined threshold T1, the first electronic device 100d executes a **step S231** wherein the digital fingerprint is updated for being representative of the electronic device(s) 110, 120, 130 connected to the LAN 170 according to the piece of information received in step S203.

The second predetermined threshold is e.g. 10% or 20% of the number of stationary electronic device(s) expected to be connected to the respective LAN according to the digital fingerprint.

Thus, when the difference in the number of stationary electronic device(s) is below the second predetermined threshold T2, the considered digital fingerprint is updated. It can indeed be expected that with such a low difference, the receiving device 110 is still in the same household, only the configuration of the household has slightly changed.

In some embodiments, in step S210 a third information representative of first stationary electronic device(s) 110, 130 connected both to the LAN 170 according to the piece of information received in step S203 and to the respective LAN according to the digital fingerprint is delivered. In such embodiments, the step S231 is not executed when the first stationary electronic device(s), identified by the third information, comprises at least one receiving device 110 configured for accessing the user account at the content provider system 160.

Indeed, when such receiving device 110 configured for accessing the user account is still connected to the LAN 170 according to the piece of information received in step S203, then one can consider that the other devices 120, 130 associated to the digital fingerprint that are no more connected according to the piece of information are not accessible (e.g. some home automation devices may be offline). But it is not necessarily a risk of fraud. There is thus no need for updating the fingerprint of the household.

In some embodiments, in step S210 a fourth information representative of second stationary electronic device(s) 110, 130 that is(are) not connected to the LAN 170 according to the piece of information received in step S203 and that is(are) connected to the respective LAN according to the digital fingerprint is delivered. In such embodiments, the step S231 is executed only when the second stationary electronic device(s), identified by the fourth information, remain(s) not connected according to successive pieces of information received during a predetermined number of executions of the step S203 and of the step S210.

Thus, the digital fingerprint of the household is updated when it is confirmed that the number of stationary electronic device(s) 110, 130 connected to a LAN is changed.

Alternatively, in a non-illustrated embodiment, the digital fingerprint is representative of at least one stationary electronic device 110, 120, 130 connected to a respective local network 170 according to a previously received piece of information associated to the user account. The method for securing access to a user account includes the steps of:
- comparing at least one stationary electronic device 110, 120, 130 connected to the local network 170 according to the piece of information to at least one stationary electronic device connected to the respective local network according to the digital fingerprint, and
- determining the correspondence between the at least one stationary electronic device present 110, 120, 130 in the local network 170 to at least one electronic device connected to the respective local network according to the digital fingerprint.

Hence, the method of securing access can be performed by only examining the characteristics of one stationary electronic device present in the local network 170.

In some embodiments, when the at least one stationary electronic device 110, 120, 130 present in the local network 170 is different from (i.e. does not correspond to) the at least one electronic device connected to the respective local network according to the digital fingerprint, a respective information representative of such difference is sent to the content provider system 160.

Referring now to **Figure 3**, in order to be able to implement the corresponding steps of the method for securing access to a user account at a content provider system in the various embodiments disclosed above in relationship with Figure 2, in some embodiments the first electronic device 100d comprises:
- a non-volatile memory 303 (e.g. a read-only memory (ROM), a hard disk, a flash memory, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described above (method for securing access to a user account at a content provider system) in the various embodiments disclosed above in relationship with Figure 2.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for securing access to a user account at a content provider system may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 4**, in order to be able to implement the corresponding steps of the method for securing access to a user account at a content provider system in the various embodiments disclosed above in relationship with Figure 2, in some embodiments the second electronic device 110d comprises:
- a non-volatile memory 403 (e.g. a read-only memory (ROM), a hard disk, a flash memory, etc.);
- a volatile memory 401 (e.g. a random-access memory or RAM) and a processor 402.

The non-volatile memory 403 is a non-transitory computer-readable carrier medium. It stores executable program code instructions, which are executed by the processor 402 in order to enable implementation of some steps of the method described above (method for securing access to a user account at a content provider system) in the various embodiments disclosed above in relationship with Figure 2.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

The steps of the method for securing access to a user account at a content provider system may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method for securing access to a user account at a content provider system (160) by at least one receiving device (110) communicatively connected to a local network (170),
**characterized in that** a first electronic device (100d) communicatively connected to at least one local network a receiving device is communicatively connected to, the first electronic device being communicatively connected to the local network through a gateway (140) of the local network, executes:
- receiving (S203), from a second electronic device (110d) communicatively connected to a local network among said at least one local network, a piece of information representative of at least one electronic device (110, 120, 130) connected to the local network, the piece of information being associated to the user account,
wherein, for at least one digital fingerprint associated to the user account, the digital fingerprint being representative of at least one electronic device connected to a respective local network according to a previously received piece of information associated to the user account, the first electronic device executes:
- comparing (S210) a number of stationary electronic device(s) connected to the local network according to the piece of information and a number of stationary electronic device(s) connected to the respective local network according to the digital fingerprint, and delivering an evaluation of a difference in a number of stationary electronic device(s) expected to be connected to the respective local network.

2. Method according to claim 1, wherein when the difference in the number of stationary electronic device(s) is above a first predetermined threshold, the first electronic device executes:
- sending (S221), to the content provider system (160), an information representative of the difference in the number of stationary electronic device(s) expected to be connected to the respective local network.

3. Method according to claim 1 or 2, wherein when the difference in the number of stationary electronic device(s) is above the first predetermined threshold, the first electronic device further executes:
- generating (S222) a new digital fingerprint representative of the at least one electronic device connected to the local network according to the piece of information, the new digital fingerprint being added to the at least one digital fingerprint associated to the user account for a next execution of said comparing.

4. Method according to claim 3, wherein when said generating is performed more than a predetermined number of times over a time period, the first electronic device further executes:
- sending (S223), to the content provider system, an information representative of the number of executions of the generation, over the time period, of a new digital fingerprint associated to the user account.

5. Method according to any of the claims 1 to 4, wherein when the difference in the number of stationary electronic device(s) is below a second predetermined threshold lower than the first predetermined threshold, the first electronic device executes:
- updating (S231) the digital fingerprint for being representative of the at least one electronic device connected to the local network according to the piece of information.

6. Method according to claim 5, wherein said comparing (S210) further delivers a third information representative of at least one first stationary electronic device connected both to the local network according to the piece of information and to the respective local network according to the digital fingerprint,
and wherein said updating (S231) the digital fingerprint is not executed when the at least one first stationary electronic device comprises at least one receiving device configured for accessing the user account at the content provider system.

7. Method according to claim 5 or 6, wherein said comparing (S210) further delivers a fourth information representative of at least one second stationary electronic device that is not connected to the local network according to the piece of information and that is connected to the respective local network according to the digital fingerprint,
and wherein said updating (S231) the digital fingerprint is executed only when the at least one second stationary electronic device remains not connected according to the successive received pieces of information after a predetermined number of executions of said receiving and of said comparing.

8. Method for securing access to a user account at a content provider system (160) by at least one receiving device (110) communicatively connected to a local network (170),
**characterized in that** a second electronic device (110d) communicatively connected to a local network among the one or more local network(s) a receiving device is communicatively connected to executes:
- obtaining (S202) a piece of information, the piece of information being representative of at least one electronic device (110, 120, 130) connected to the local network, the piece of information being associated to the user account; and
- sending (S203), to a first electronic device (100d) communicatively connected to the local network through a gateway (140) of the local network, the piece of information.

9. Method according to claim 8, wherein said obtaining a piece of information is executed responsive to a request sent (S201) by the receiving device for connecting to the user account on the content provider system (160).

10. Method according to claim 8 or 9, wherein said obtaining a piece of information is executed according to a predetermined time schedule.

11. Method according to any of the claims 8 to 10, wherein said obtaining a piece of information comprises:
- receiving, from a router of the local network, a list of one or more electronic device(s) connected to the local network.

12. Method according to claim 11, wherein the one or more electronic device(s) is connected to the local network using a Matter protocol.

13. Computer program product **characterized in that** it comprises program code instructions for implementing a method according to any of the claims 1 to 12.

14. Electronic device (100d) comprising at least one processor or at least one field-programmable gate array or at least one dedicated computing machine configured for carrying out the steps of the method of any of the claims 1 to 7.

15. Electronic device (110d) comprising at least one processor or at least one field-programmable gate array or at least one dedicated computing machine configured for carrying out the steps of the method of any of the claims 8 to 12.
